(19) Europäisches Patentamt
European Patent Office
Office européen des brevets

(11) **EP 1 457 513 A1**

(12) **EUROPEAN PATENT APPLICATION**

(43) Date of publication:
**15.09.2004 Bulletin 2004/38**

(51) Int Cl.⁷: **C08G 81/02**, C08L 51/06, C09D 151/06

(21) Application number: **04250805.1**

(22) Date of filing: **16.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **21.02.2003 US 449485 P**

(71) Applicant: **ROHM AND HAAS COMPANY**
**Philadelphia, Pennsylvania 19106-2399 (US)**

(72) Inventors:
• **Jackson, Michael L.**
**LaGrange Illinois 60525 (US)**
• **Stubbs, Frank A.**
**Dyer, Indiana 46311 (US)**
• **Mecozzi, Joseph M.**
**St. John, Indiana 46373 (US)**

• **Smith, Dean T.**
**Crown Point, Indiana 46307 (US)**
• **Neubeck, Hans B.**
**Cedar Lake, Indiana 46303 (US)**
• **Rybarczyk, David B.**
**Schereville, Indiana 46375 (US)**
• **Smith, Kevin W.**
**Schereville, Indiana 46375 (US)**
• **Hoffman, Rene C.**
**Valparaiso, Indiana 46385 (US)**

(74) Representative: **Kent, Venetia Katherine et al**
**Rohm and Haas (UK) Ltd.,**
**European Patent Department,**
**28th Floor,**
**City Point,**
**One Ropemaker Street**
**London EC2Y 9HS (GB)**

(54) **Chlorine free and reduced chlorine content polymer and resin compositions for adhesion to plastics**

(57) The present invention provides a composition comprising one or more than one isotactic, modified polypropylene (MPP) or polypropylene-α-olefin copolymer (MPP copolymer) and one or more than one polymer or resin, wherein said MPP or MPP copolymer is modified with one or more than one carboxyl or anhydride, preferably maleic acid or anhydride, or with one or more than one epoxy or hydroxyl group. Alternatively, the present invention provides a composition comprising an adduct which is the reaction product of one or more than one isotactic, modified polypropylene (MPP) or isotactic, modified polypropylene-α-olefin copolymer (MPP copolymer) with one or more than one carboxyl, anhydride, epoxy or hydroxyl functional reactant, polymer or resin. The composition may be used to make aqueous or solvent borne compositions for making primers, coatings, powder coatings, films, laminates, moldings and shaped-articles having good adhesion to thermoplastic polyolefins (TPO) or polyolefin, while partly or wholly avoiding use of environmentally harmful chlorinated polyolefin (CPO) additives. The isotactic MPP or MPP copolymer preferably has one or two terminal carboxyl, anhydride, epoxy or hydroxyl group. More preferably, the isotactic MPP or MPP copolymer has a low molecular weight and a melting point of from 70 to 145°C, preferably 80 to 105°C for MPP copolymer and preferably 105 to 120°C for an MPP homopolymer, and provides excellent penetration into TPO or polyolefin substrates.

EP 1 457 513 A1

**Description**

FIELD OF THE INVENTION

The present invention relates to chlorine-free coating, film-forming and molding compositions which exhibit improved adhesion to plastic substrates. More particularly, it relates to chlorine-free or reduced chlorine compositions containing epoxy-, hydroxyl-, carboxyl-, or anhydride-functional propylene polymers, copolymers and adducts and the coatings, films and molded articles formed from those compositions.

BACKGROUND OF THE INVENTION

Because of the low cost, light weight, good impact resistance, ease of molding and recyclability of polyolefins, such as polypropylene and polypropylene containing compounds modified with rubber, also known as thermoplastic olefins (TPO), their use has grown significantly in areas such as the automotive market since the 1970's. They have been used in interior applications, such as airbag covers, and exterior applications, such as fascia and trim. Coatings have been applied to these polyolefins and TPO substrates in attempts to improve the weatherability, hardness, color and appearance of these substrates. Coating compositions designed to improve adhesion to untreated thermoplastic polyolefin (TPO), and untreated polypropylene substrates have comprised chlorinated polyolefins (CPO) which are either dissolved into aromatic solvents or made into aqueous dispersions for waterborne coatings. However, many negatives are associated with the use of CPO, including the toxicity and poor recyclability of chlorine-containing organic compounds. Further, the limited compatibility of CPO with other polymers results in coatings with poor adhesion and appearance properties, especially in solvent borne systems wherein CPO does not readily dissolve or disperse.

Attempts to avoid the incompatibility of CPO with other polymers have resulted in coating compositions which comprise large amounts of highly toxic chlorinated solvents, e.g. methylene chloride. Still other coatings have avoided the use of CPO altogether, however coatings for TPO and other polyolefin substrates that do not contain effective amounts of CPO have proven unsatisfactory in their adhesion to those substrates.

U.S. Patent No. 6,310,134, to Templeton et al., discloses solvent based adhesion-promoting primer compositions comprising 0.5 to 40 weight% of a chemically modified, carboxyl, ester or anhydride functional, amorphous polyolefin selected from polypropylene, a propylene copolymer, a propylene terpolymer, an ethylene copolymer and an ethylene terpolymer. The Templeton et al. compositions provide coatings which avoid to some degree the problems caused by the use of crystalline polyolefins, which can give coatings having an inferior hardness and tensile strength. However, the Templeton et al. coatings lack strong adhesion to TPO substrates, e.g. in humidity resistance testing and in resistance to solvents such as gasoline, and the amorphous polyolefins of Templeton et al. provide inconsistent dispersibility and coating properties such as hardness. Moreover, Templeton et al. disclose only a solvent-based primer composition, providing no waterborne primers, no basecoat or color coatings, and no molding, film-forming, or powder coating compositions.

There remains a need for chlorine-free coating, film-forming and molding compositions which provide excellent adhesion to TPO and other plastic substrates. Further, there remains a need to provide propylene polymer containing compositions that are chlorine-free or that have a reduced chlorine content and that are compatible with a range of aqueous and solvent borne coatings, film forming and molding compositions. The present invention provides chlorine free coating, film forming, and molding compositions which meet these needs without the above mentioned drawbacks.

SUMMARY OF THE INVENTION

The present invention provides compositions comprising one or more than one isotactic, low molecular weight, modified polypropylene (MPP) or polypropylene-α-olefin copolymer (MPP copolymer) and one or more than one polymer or resin, wherein an MPP or MPP copolymer is modified with carboxyl, anhydride, hydroxyl or epoxy groups, or combinations of those groups and, further wherein, the polymer or resin is preferably an acrylic polymer, an alkyd resin, a urethane polymer, a polyester resin and combinations thereof. Preferably, an isotactic MPP or MPP copolymer contains one or two terminal carboxyl, anhydride, hydroxyl or epoxy groups. The compositions may be used in waterborne (aqueous) or solvent borne coatings and in film-forming compositions which have excellent adhesion to untreated thermoplastic polyolefin (TPO) substrates and to polyolefin substrates. Moreover, the compositions may be used in moldings, laminates or shaped articles to which polyolefin containing or TPO containing coatings, paints, primers, adhesives, shaped or molded articles or films will strongly adhere.

In an alternative embodiment of the present invention, a composition comprises one, or more than one adduct, which is the reaction product of one or more than one isotactic, MPP or MPP copolymer with one, or more than one, hydroxyl, epoxy or carboxyl functional reactant, or with one or more than one polymer or resin, preferably an hydroxyl or carboxyl functional acrylic or polyester polymer, a urethane polymer or an acrylic modified alkyd. Adducts may be formed via reaction of the one, or more than one, polymer, resin or reactant with the carboxyl, anhydride, hydroxyl or epoxy functionality of the isotactic MPP or MPP copolymer. One, or more than one, isotactic MPP or MPP copolymer adduct may be used in aqueous and solvent borne coatings, as well as in film-forming, article shaping and molding compositions. In addition, an isotactic MPP or MPP copolymer adduct may be used as a compatibilizer which, when mixed with any polymer or resin constituting a part of the adduct, provides compatibility between the polypropylene portion of the adduct and the polymer or resin with which the adduct is mixed.

DETAILED DESCRIPTION OF THE INVENTION

According to the present invention, one, or more than one, polymer or resin and one or more than one isotactic MPP and MPP copolymer provide coating, film forming and molding compositions having improved adhesion to untreated TPO and other polyolefin substrates, and which, when used to make laminates, molded or shaped articles, provide improved adhesion to polyolefin containing coatings, shaped or molded articles, laminates or films applied thereto.

Isotactic MPP and MPP copolymers and adducts provide an environmentally friendly alternative to CPO polymers. Further, the isotactic MPP and MPP copolymers and adducts used in the present invention provide improved compatibility with other polymers or resins in comparison to CPO, and improved solubility in both aqueous and organic solvent systems. The compositions of the present invention can thus be used to make chlorine-free coating and film forming formulations comprising standard automotive crosslinkers, such as melamine formaldehyde and isocyanate resins. Further still, the polymer or resin compositions have solubility properties similar to the same polymer or resin compositions which contain no isotactic MPP and MPP copolymers or adducts.

As used herein, the term "acrylic" includes both acrylic and methacrylic and the term "acrylate" includes both acrylate and methacrylate.

As used herein, the term "adduct" includes the reaction product of a polymer, a resin or a reactant having one, or more than one, of a hydroxyl, carboxyl, epoxy functional group, e.g. a diol or a hydroxyacid, with one or more than one carboxyl, anhydride, hydroxyl or epoxy functionality of an isotactic MPP or MPP copolymer. "Adducts" may also include the reaction product of a polymer or resin with the residual olefin functionality, if any, of the isotactic MPP or MPP copolymer.

As used herein, the term "maleic" comprises either maleic acid or maleic anhydride independently of each other, unless otherwise indicated.

As used herein, the term "Mn" refers to number-average molecular weight, as determined by gel permeation chromatography (GPC).

As used herein, unless otherwise indicated, the phrase "per hundred parts" resin or "phr" means the amount, by weight, of an ingredient per hundred parts, by weight, of the total amount of resin, reactant monomer, and polymer contained in a composition, including crosslinking resins.

As used herein, the term "polymer" includes polymers, copolymers and terpolymers, and block copolymers and terpolymers.

As used herein, the term "shaped article" includes both plastic and metal molded articles, forged articles, such as coil springs, pressed articles, e.g. tablets, cast articles, e.g. brake shoes made by dewatering or removing solvent from suspensions, and multilayer films and laminates.

As used herein, the term "TPO" refers to polypropylene containing compounds modified with rubber.

An isotactic MPP homopolymer according to the present invention may comprise from 40-90%, by weight, preferably from 60-90%, by weight of isotactic units, based on the total weight of monomeric units contained in the polymer. Highly isotactic MPP has a definite melting point and a surprisingly narrow molecular weight distribution or low polydispersity of from 1.5 to 3.0, preferably from 1.5 to 2.0.

An isotactic homopolymer used to make an isotactic polypropylene comprises polypropylene (PP) having from 40-90%, by weight, preferably from 60-90%, by weight, of isotactic units, based on the total weight of monomeric units contained in the polymer, and is preferably an olefin-terminal polypropylene.

An isotactic MPP copolymer according to the present invention may comprise from 9% to 90%, preferably from 9 to 60%, by weight, of isotactic units, based on the total weight of monomeric units contained in the polymer. According to the present invention, an MPP copolymer having a lower isotacticity retains a narrow molecular weight distribution and a polydispersity of 1.5 to 3.0. However, isotactic MPP copolymers generally have a lower melting point than corresponding isotactic MPP homopolymers, e.g. of the same molecular weight, and therefore provide improved wet out and penetration into a substrate, such as TPO, at low temperatures, e.g. below 250°F (121°C), preferably below 200°F (93°C).

An isotactic copolymer used to make an MPP copolymer may be a random copolymer of propylene with a higher $\alpha$-olefin, i.e. having 3 to 12 carbon atoms, or a block copolymer of polypropylene with a poly(higher $\alpha$-olefin). A random copolymer of a higher $\alpha$- olefin and propylene is preferred and the proportion of the propylene component is preferably not less than 10 weight% based on the weight of the reactants used to make the copolymer, more preferably not less than 40 weight%. If it is less than 10 weight %, then improved adhesion to TPO or polypropylene may not be observed. Examples of higher $\alpha$-olefins include, butene- 1, pentene-1, octene-1, and, preferably, hexene-1. Higher $\alpha$-olefin levels may range from 1 to 99 wt % , preferably 2 to 60 weight %, and more preferably from 5 to 40 weight % of the propylene/$\alpha$-olefin copolymer reaction mixture. Mixtures of two or more of the higher $\alpha$-olefins may be copolymerized with propylene. Isotactic MPP copolymers may be exemplified by isotactic modified propylene/hexane, isotactic propylene/butene, and isotactic propylene /butene/hexene copolymers. Preferably, an isotactic polypropylene (PP) or PP copolymer used to make an isotactic MPP or MPP copolymer of the present invention may have a controlled structure defined by the presence of one or two terminal olefin groups. Such a (co)polymer may be modified at its terminal olefin groups by reaction, e.g. with maleic anhydride, to form one or two terminal carboxyl or anhydride groups, or by reaction to form one or two terminal hydroxyl or epoxy groups. The preferred terminally modified isotactic MPP or MPP copolymers give consistent dispersibility and adhesion properties in a variety of formulations and uses, and ease formation of adducts via reaction with functional reactants, polymers or resins.

The melting point of an isotactic MPP or MPP copolymer used in the present invention may range from 70 to 145°C, preferably from 80 to 120°C, more preferably from 80 to 105°C for MPP copolymers and, more preferably, from 105 to 120°C for MPP homopolymers. A lower melting point isotactic MPP or MPP copolymer may be selected from polymers having a lower molecular weight, an MPP copolymer having a lower proportion of isotactic units, or a combination thereof.

Lower isotacticity MPP copolymers having less than 60%, by weight, of isotactic units, based on the total weight of monomeric units contained in the polymer, may be provided by increasing the comonomer, e.g. 1-hexene, content of the MPP copolymer, thereby lowering the melting point of the MPP copolymers. Lower isotacticity MPP copolymers are preferred for low temperature cure applications, e.g. coatings curing at 160 to 250°F (71 to 121°C), preferably those curing at from 160 to 200 °F (71 to 93.3°C) for use on interior automotive plastics.

A "low" molecular weight isotactic MPP or MPP copolymer may have a number average molecular weight and may range from 500 to 10,000 Mn, as determined by GPC, preferably from 800 to 7,000 Mn, more preferably from 1,000 to 4,000 Mn, and even more preferably from 1,000 to 2,500 Mn. The melt viscosity of such polymers may range from 20-300 cP @ 149 °C. By virtue of a low melting point, e.g. below 120°C, preferably below 105°C, an isotactic MPP or MPP copolymer may provide improved wet out and penetration of coatings, primers and film forming compositions of the present invention into TPO or polyolefin containing substrates and improves the adhesion of low temperature curing coatings to these substrates.

An isotactic MPP or MPP copolymer may contain from 1 to 10, preferably 1 to 5, more preferably, one or two terminal carboxyl, anhydride, epoxy or hydroxyl groups per molecule. Isotactic MPP and MPP copolymers having 1 to 5 carboxyl, anhydride, hydroxyl or epoxy groups may be selected for their excellent solubility in xylene, toluene and other organic solvents. Any isotactic MPP and MPP copolymer or adduct having at least two carboxyl, anhydride, hydroxyl or epoxy groups may effectively crosslink a polymer or resin composition having a group reactive with a carboxyl, anhydride, hydroxyl or epoxy group. Preferably, carboxyl and anhydride modifying groups are derived from reaction of the MPP or MPP copolymer with maleic acid or maleic anhydride groups. Further, a di-, tri- or higher functional maleic functional isotactic MPP or MPP copolymer may comprise the reaction product of two or more maleic functional isotactic MPP or MPP copolymers with each other. Other isotactic MPP and MPP copolymers useful in the present invention may be made by reacting the unsaturated group of an unsaturated carboxylic acid, anhydride; alcohol, diol, polyol or hydroxyacid onto an isotactic polypropylene or a polypropylene/olefin copolymer. A preferred isotactic MPP and MPP copolymer used in the present invention is made by Baker Petrolite polymers division of Baker Hughes, Inc., Sugarland, TX.

The $\alpha,\beta$-unsaturated dicarboxylic acids or their carboxyl anhydrides that may be reacted with isotactic PP or isotactic propylene/$\alpha$-olefin copolymer to modify the (co)polymer may be exemplified by maleic acid, fumaric acid, itaconic acid, citraconic acid, allylsuccinic acid, mesaconic acid and aconitic acid, and their acid anhydrides. The amount of $\alpha,\beta$-unsaturated dicarboxylic acid or its acid anhydride used may range from 1 to 20% by weight of the acid or anhydride modified copolymer, preferably from 2 to 10% by weight and more preferably from 4 to 7%. If under 1 % by weight of the acid or anhydride reactant is used, the stability of dispersion in a waterborne composition will be adversely affected and, if over 20% by weight, the efficiency of the modifying reaction decreases.

A composition according to the present invention may comprise one, or more than one, low molecular weight, isotactic MPP or MPP copolymer and one, or more than one, polymer or resin. The polymer or resin may comprise one, or more than one, polymer or resin useful as a coating binder, as a film-former, or useful for making moldings and shaped articles. For example, the polymer or resin may comprise one or more than one polymer or resin selected from the group consisting of an acrylic, a polyfunctional acrylic monomer, a polyester, an alkyd, a polyurethane, a polyamide, a polyamine, a polyimine, a styrene polymer, a vinyl polymer, an epoxy resin, and mixtures and combinations thereof. Preferably, the polymer or resin comprises an acrylic modified alkyd, a polyurethane, a polyester or an acrylic polymer made from a C1-C12 alkyl (meth)acrylate, more preferably, an acrylic modified alkyd, or an acrylic polymer comprising n-butyl methacrylate (n-BMA), ethyl hexyl methacrylate (EHA), or mixtures thereof.

In an alternative embodiment according to present invention, a composition comprises an isotactic MPP adduct which is the reaction product of one, or more than one, low molecular weight, isotactic MPP or MPP copolymer and one, or more than one, hydroxyl, carboxyl, or epoxy functional reactant, polymer or resin, or a combination thereof. The preferred polymer or resin may comprise a hydroxyl or carboxyl functional acrylic polymer, polyurethane, a carboxyl or hydroxyl functional polyester, or epoxy resin, and, more preferably, an acrylic or methacrylic polymer or copolymer which comprises HEMA or other hydroxy alkyl methacrylate comonomers, or methacrylic acid (MAA), or acrylic acid (AA) polymerized therein. The preferred hydroxyl, carboxyl, or epoxy functional reactant may be a diol or a polyol, such as cyclohexane dimethanol or butanediol, a diacid, such as maleic acid, propanedioic acid, and succinic acid, a hydroxyacid, such as glycolic acid, hydroxybutyric acid, dimethanol propionic acid, and lactic acid, or glycidyl (meth) acrylate. The adduct formed by reacting an isotactic MPP or MPP copolymer with a hydroxyl, carboxyl, or epoxy functional reactant may further be reacted with a polymer or resin. Examples of an isotactic MPP or MPP adduct may comprise the reaction product of:

A COOH functional polyester or acrylic polymer resin, a urethane polymer, an alkyd resin or an epoxy resin with an hydroxyl functional, or hydroxyl and carboxyl functional isotactic MPP or MPP copolymer; for example, an adduct formed by reacting epoxy functional isotactic MPP or MPP copolymer with a polyol, like butanediol, or dimethanol propionic acid, or an adduct formed by reacting an excess amount of a diol, hydroxyacid or polyol with an anhydride functional isotactic MPP or MPP;

any OH group containing polymer, resin or crosslinker, such as a polyester or acrylic, with a carboxyl functional isotactic MPP or MPP, e.g. one formed by mixing a maleic or other anhydride functional MPP or MPP copolymer in water, alcohol or water alcohol, or one formed by reacting epoxy MPP or MPP copolymer with an hydroxyacid, such as hydroxybutyric acid or lactic acid;

a diol, e.g. butanediol, or a lower (C2-C8) (cyclo)alkanediol, with an epoxy terminated isotactic MPP or MPP copolymer;

(meth)acrylic acid with an epoxy functional isotactic MPP or MPP copolymer to form an acrylated, hydroxyl functional polypropylene, useful in making coatings, powder coatings, film-forming and molding compositions for use in ultraviolet (UV) cure systems for adhesion to TPO, other polyolefin substrates, or other heat sensitive substrates such as thermoplastics;

a carboxyl, anhydride, hydroxyl or epoxy functional isotactic MPP or MPP copolymer with a binder polymer comprising an amine functional polyimide or polyamide;

a monomaleic functional isotactic MPP or MPP copolymer with an acrylic polymer containing an hydroxy alkyl (meth)acrylate, such as 2-hydroxy ethyl acrylate (HEA), 2-hydroxy ethyl methacrylate (HEMA), or 4- hydroxy butyl acrylate (HBA) monomer to give a carboxyl functionality for water reducible acrylics or aqueous acrylic emulsions with adhesion to TPO or other polyolefin substrates;

the reaction product of 2 moles of a single maleic anhydride terminated isotactic MPP or MPP copolymer with 1 mole of cyclohexane dimethanol to give a dicarboxyl functional adduct for aqueous polymer dispersion compositions; the adduct may further be reacted with a hydroxyl functional polymer or resin to form a polymer adduct for aqueous, solvent borne and molding or shaping compositions;

the reaction product 1 mole of a maleic anhydride terminated isotactic MPP or MPP copolymer with 2 to 2.5 moles of cyclohexanedimethanol to give a dihydroxyl functional adduct for use in aqueous dispersions of branched polyesters, or for reaction with acid functional polyesters or acrylics, and urethane polymers to make adducts for aqueous dispersions;

an anhydride functional, e.g. maleic anhydride, isotactic MPP or MPP copolymer with water, water alcohol or alcohol, e.g. by mixing, and, if desired, heating, to form two dicarboxyl (carboxyl) groups per maleic group, optionally followed by reaction with 2 molar equivalents of monoepoxy reactant to form a hydroxyl functional isotactic MPP, or followed by reaction with one molar equivalent of an epoxy reactant to form an hydroxyl and a carboxyl group;

an epoxy terminal isotactic MPP homopolymer (e.g., with a Mn of 1700) with a diol, such as a C2-C8 diol, like butanediol, in the presence of a known cationic cure or amine catalyst to give an OH functional isotactic MPP or MPP copolymer for use with melamine or isocyanate crosslinkers or curing agents;

an epoxy terminal isotactic MPP homopolymer (e.g., with a Mn of 1700) with a carboxylic acid functional reactant, such as adipic acid, or with a hydroxyacid to give a carboxyl functional isotactic MPP or MPP copolymer for use with or further reaction with alcohols, polyols, and OH or isocyanate containing polymers, resins or crosslinkers, such as polyesters, polyurethanes, acrylics and alkyds;

an epoxy functional isotactic MPP or MPP copolymer with dimethanol propionic carboxyl to give an OH and COOH group containing isotactic MPP or MPP copolymer for use and, optionally, further reaction with acrylics, polyesters, polyurethanes and epoxy resins; and,

1 mole of a dimaleic functional isotactic PP with 2 moles of a diol to form a diester adduct having OH and COOH functionality for use and, optionally, further reaction with acrylics, polyesters, polyurethanes and epoxy resins.

A preferred isotactic MPP or MPP copolymer adduct may comprise the reaction product of an epoxy, hydroxyl, or carboxyl functional reactant, polymer or resin with an isotactic MPP or MPP copolymer having one or two terminal epoxy, hydroxyl, anhydride or carboxyl groups.

Where a composition comprises an adduct which is the reaction product of one or more than one isotactic MPP or MPP copolymer with a functional reactant, polymer or resin, and additionally comprises unadducted polymer, resin or isotactic MPP or MPP copolymer, or both, the adduct may be referred to as a compatibilizer for the polymer or resin and the MPP or MPP copolymer.

In another alternative embodiment of the present invention, a composition according to the present invention may additionally comprise CPO in addition to isotactic MPP or MPP copolymer or adduct. In any such composition, an epoxy functional isotactic MPP or MPP copolymer or adduct is preferred, as it may act as a stabilizer for CPOs, because epoxy scavenges free HCl liberated from CPOs in use. Such compositions contain reduced amounts of CPO and, thus, reduced amounts of chlorine. A solventborne composition or a dry polymer composition may include up to 15 parts per hundred resin (phr), preferably 0-10 phr, of CPO in addition to the isotactic MPP or MPP copolymer. Further, an aqueous composition may include up to 25 parts per hundred resin (phr), preferably 0-15 phr, of CPO in addition to the isotactic MPP or MPP copolymer.

A composition according to the present invention may comprise from 5% to 100%, by weight, preferably 7 to 60%, by weight, and more preferably 10 to 30% by weight of one or more than one isotactic MPP or MPP copolymer, based on the total weight of polymer or resin reactant and isotactic MPP or MPP copolymer. Further, in an isotactic MPP or MPP copolymer adduct composition, isotactic MPP or MPP copolymer may comprise from 5% to 99% by weight, preferably 7 to 60% by weight, and more preferably 10 to 30% by weight, based on the total weight of the reactants used to make the adduct plus the weight of any other polymer, resin or isotactic MPP or MPP copolymer present in the composition.

A composition according to the present invention may be formulated into a variety of coatings and liquid film forming compositions, such as solventborne or aqueous primers, basecoats, crosslinked basecoats, color coats, topcoats, clear coats and adhesion promoters. Alternatively, a composition according to the present invention may be used as molding, film forming, powder coating and shaped article, e.g. laminate and decalcomania, forming compositions, or it may be used in making storage stable batches which can be added to liquid coating and film forming compositions.

In an aqueous composition according to the present invention, useful polymers or resins may comprise polyolefins, acrylic polymers, acrylic modified alkyds, polyesters, polyamides, polyurethanes, and blocked polyisocyanates. An aqueous dispersion according to the present invention may further comprise an anionic, a cationic or a non ionic aqueous dispersion formed with or without a dispersant, an emulsifier or a surfactant.

In an embodiment of an aqueous composition according to the present invention, an epoxy, hydroxyl, carboxyl or anhydride functional isotactic MPP or MPP copolymer or adduct having from 2 to 10 hydroxyl, carboxyl or anhydride groups may be used as an aqueous wetting agent, surfactant, or dispersant, e.g. for a polymer or resin or for a pigment or colorant additive, a "self-dispersing" MPP or MPP copolymer or adduct. For example, a self-dispersing isotactic MPP or MPP copolymer for use in an aqueous composition may comprise the reaction product of two or more anhydride functional isotactic MPP copolymers with each other and any hydroxyl, carboxyl, or hydroxyl and carboxyl functional isotactic MPP or MPP copolymer having 2 or more of such functional groups.

A nonionic aqueous dispersion may comprise, for example, one, or more than one, polymer or resin, a carboxyl functional isotactic MPP, CPO polymer, cosolvent, nonionic surfactant, and water.

An anionic aqueous dispersion useful as a pigment dispersion may comprise, for example, a di- or tri-, or higher maleic functional isotactic MPP (co)polymers or, alternatively, the reaction product of two or more maleic functional isotactic MPP (co)polymers (Mn of from 1,000 to 2,000, e.g. 1,700) with each other, in combination with pigments, optionally, anionic surfactant, and one or more than one aqueous acrylic or urethane dispersion.

A self-dispersing isotactic maleic anhydride or carboxyl functional MPP or MPP copolymer or adduct may be used as a pigment dispersant, e.g. carbon black, metal oxide, mixed metal oxides or titania. For example, a pigmented coating with direct adhesion to TPO may comprise, a blend of one, or more than one, pigment dispersion each comprising isotactic maleic anhydride or carboxyl functional MPP or MPP copolymer, an acrylic emulsion, optionally, an aqueous CPO dispersion, a cosolvent and thickener. More specifically, such an aqueous dispersion may comprise one or more than one maleic functional isotactic MPP or maleic functional isotactic PP/hexene copolymer, mixed with one or more than one hydroxy functional or carboxyl functional acrylic polymer or resin to make a waterborne exterior automotive coating.

Alternatively, the aqueous isotactic maleic functional PP or maleic functional isotactic PP/hexene copolymer may be made part of initial charge for an nBMA/MMA acrylic emulsion to form a coating which provide good adhesion to TPO when added in amounts of 7 to 60 phr, preferably 40 to 60 phr. The resulting aqueous dispersion coating exhibits good initial adhesion to untreated TPO when baked for 30 minutes @ 250°F (121°C), as well as excellent gloss and appearance, with no adhesion loss or blistering after 96hrs. water immersion.

In an embodiment of a solventborne composition of the present invention, one or more than one isotactic MPP or MPP copolymer or adduct may be dissolved into one or more than one organic solvent and blended with a polymer or resin, totally or partially replacing the CPO resins currently used in solventborne adhesion promoters, coatings, primers and film forming compositions. Polymers or resins useful in the organic solvent borne compositions according to the present invention include alkyds, polyurethanes, polyesters, acrylics, acrylic modified alkyds, and mixtures and combinations thereof. Preferred solventborne polymers or resins may include higher molecular weight alkyds, polyurethanes, polyesters, acrylics and acrylic modified alkyds, each having low hydroxyl values of from 1 to 10 and low carboxyl values of from 1 to 10. The preferred polymers dissolve readily in organic solvents and yield films and coatings with good mechanical properties. Because an epoxy, hydroxyl, carboxyl or anhydride modified isotactic MPP or MPP copolymer or adduct having from 1 to 5 epoxy, hydroxyl, carboxyl or anhydride groups exhibits excellent solvent solubility, such an isotactic MPP or MPP copolymer may be used as a stir-in adhesion promoter which is added directly to a solvent borne coating or primer composition.

Most preferably, a solventborne coating, shaping, molding or film forming composition according to the present invention comprises a monoepoxy, diepoxy, monomaleic or dimaleic acid or anhydride, monohydroxyl, or dihydroxyl terminated isotactic PP or isotactic PP/hexene copolymer, each of which is soluble in xylene, toluene, and in aromatic solvents and melts at below 120°C. Such compositions exhibit good thixotropic properties, and adhesion and gasoline immersion properties, thus making them useful for under coating and for the coating of rough surfaces. For example, a metallic look solvent borne coating composition may comprise a preferred dimaleic functional isotactic PP/hexene copolymer in combination with a low solids, COOH functional or isocyanate functional acrylic polyester polymer, and, further, with a high loading of vapor deposited pigment flake, such as metallic pigment, preferably aluminum flake. A bright metallic coating adhering directly to TPO or another polyolefin substrate is thereby obtained with good film splitting resistance or cohesion, film appearance and adhesion to TPO following a 250 °F (121°C) bake. In addition, the composition may comprise a wetting agent to improve metal control. Still further, the reaction product of a preferred monomaleic terminated isotactic MPP or MPP copolymer with a solventborne hydroxyl functional polymer, such as an acrylated alkyd, provides a solvent borne adduct for adhesion to TPO or other polyolefin substrates. Yet still further, the adduct of a preferred epoxy terminal isotactic MPP or MPP copolymer with a carboxyl functional acrylic polymer or with a carboxyl functional polyester, in combination with metallic pigments, provides solventborne coatings which exhibit excellent adhesion and metal control. Yet even still further, a preferred adduct which is the reaction product of 7%, by weight, of an monomaleic terminal isotactic PP or a monomaleic terminal isotactic PP/hexene copolymer, and an hydroxyl functional acrylic polymer provides a solventborne binder having excellent adhesion to TPO or polyolefin substrates. Any or all of these compositions may further comprise a CPO, which, in the case of acrylic polymers may optionally be present in the initial acrylic polymerization medium.

Another example of a solventborne coating or film forming composition according to the present invention comprises a preferred solvent soluble monoepoxy, monomaleic or dimaleic terminated isotactic PP or isotactic PP/hexene copolymer having a melting point of less than or equal to 120°C, preferably below 105°C for MPP copolymers. The monoepoxy, monomaleic or dimaleic terminated isotactic PP or isotactic PP/hexene may be added directly as a stir-in adhesion promoter to give coatings that may be cured at a temperature of from 160 to 250 °F (71 to 121°C). Coatings for TPO that provide excellent wet out characteristics and smoothness comprise, for example, acrylic modified alkyd and a monomaleic terminated isotactic PP/hexane having a melting point of 80°C to 105°C. The composition may optionally further include CPO, which may be added at any time, such as in the polymerization medium.

In a film forming and laminating composition, one or more than one isotactic MPP and MPP copolymer or adduct may be combined with one or more than one polymer or resin to make films or laminates having improved adhesion to TPO, polyolefin, plastic or metallic surfaces, articles and metal films, wherein metals preferably include chrome, steel or aluminum. The isotactic MPP and MPP copolymers and adducts may be used in the amount of from 5 to 99 phr, preferably 7 to 60 phr, and more preferably 7 to 30 phr. Preferred film forming and laminating compositions according to the composition comprise the preferred isotactic MPP or MPP copolymers and adducts and the preferred polymer binders as are described in solvent borne coatings, film forming and primer compositions.

In a powder coating according to the present invention, a polymer or resin may comprise, for example, an epoxy thermoset, a polyester resin, an acrylic or urethane polymer, or hybrids and mixtures thereof, optionally adducted with MPP and MPP copolymers. A low temperature curing powder coating may comprise a bisphenol epoxy resin, such as the reaction product of bisphenol and epichlorohydrin, a low temperature curing agent, such as an epoxy adduct of a polyamine or an imidazole-epoxy adduct, and an epoxy modified MPP homopolymer or copolymer. In such a coating, a higher melting point MPP (co)polymer, e.g. from 105 to 145°C, may be selected to provide blocking resistance, whereas a lower melting point MPP (co)polymer, e.g. from 80 to 105°C, may be selected to provide even flow and ease the formation of a coating at low temperatures.

A corrosion resistant zinc rich powder coating may comprise one or more than one isotactic MPP or MPP copolymer or adduct, one or more than one polyethylene or polypropylene polymer, and from 25 to 300 phr of zinc. The exemplary powder coating may be applied directly to untreated steel, to primed steel, or to a polyolefin coating to give a corrosion resistant finish.

In a powder coating for plastic or any other heat sensitive substrate, such as wood, the preferred solvent soluble MPP and MPP copolymers or adducts having a melting point below 105°C may be used to provide low temperature curing, e.g. at or below 300 °F (149 °C), or UV curable powder coatings for TPO, plastic and other heat-sensitive substrates.

In a molding or shaped article forming composition according to the present invention, an isotactic MPP or MPP copolymer or adduct may be used as a plastics additive to provide improved abrasion resistance, or it can be added to a polypropylene composition as a polypropylene flattening agent or texturing agent. A molding or shaped article formed from a composition according to the present invention may have improved paintability, and improved adhesion to TPO, polypropylene or olefin containing films, coatings, laminates, or any articles that may be applied to such a molding or shaped article. The isotactic MPP and MPP copolymers and adducts may be used in the amount of from 5 to 99 phr, preferably 7 to 60 phr, and more preferably 7 to 30 phr. Useful polymers or resins in molding and article forming compositions may include polypropylene, other polyolefins, polystyrene, vinyl polymers, polyesters, acrylics, polyimides, polyamides and polyurethanes.

Solvents useful in the solventborne compositions according to the present invention may include aromatic solvents, such as toluene, xylene, naphtha, and petroleum distillates; aliphatic solvents, such as heptane, octane and hexane; ester solvents, such as butyl acetate, isobutyl acetate, butyl propionate, ethyl acetate, isopropyl acetate, butyl acetate, amyl acetate, ethyl propionate and isobutylene isobutyrate; ketone solvents, such as acetone and methyl ethyl ketone; mixtures of any of the foregoing solvents with water; and mixtures thereof.

Compositions according to the present invention may contain one or more than one additive, such as suitable curing agents for hydroxyl functional, isocyanate functional, epoxy functional and amine functional resins, crosslinking agents for acrylic polymers, free radical UV photo initiators, catalysts, thickeners, wetting agents, flow aids, pigments, resins, fillers, impact modifiers, stabilizers, antioxidants, buffers, colorants, and dyes, all used in conventional amounts.

A curing agent or crosslinker may be combined with a polymer or resin to make a stable, one-component aqueous or solvent borne composition instead of a two-component composition. For example, in an adduct containing waterborne composition, a carboxyl functional acrylic reacted with epoxy terminated isotactic MPP may be crosslinked with carbodiimides, rather than with isocyanate resins, thereby providing a one component coating composition. Suitable curing agents for use in one-component coating, primer, film forming, and molding compositions may comprise melamines, such as hexa(methoxymethyl) melamine (HMMM); polyamines, such as imidazoles, methyl and phenyl imidazole, diamines such as ethylenediamine, triamines, and dicyandiamide; epoxy adducts of polyamines, such as the various ANCAMINE ® curing agent products available from Air Products & Chemicals, Inc.; and triglycidyl isocyanurate (TGIC).

Suitable curing agents for two component coating, primer and film forming compositions may comprise isocyanates, such as hexamethylene diisocyanate and isophorone diisocyanate. Suitable acrylic crosslinkers may include diacrylates and dimethacrylates, divinyl monomers, such as (poly)ethylene glycol dimethacrylates and divinyl benzene, and prepolymers such as (meth)acrylated urethanes, polyesters and epoxy resins.

Suitable UV free radical curing catalysts may include alpha-cleavage photoinitiators, hydrogen abstraction photoinitiators, benzophenones, or acetophenone derivatives. Examples of radical photoinitiators useful in the present invention are 1-hydroxycyclohexyl phenylketone, available under the trade name IRGACURE 184®; 2,2-dimethoxy-2-phenyl acetophenone, available under the trade name IRGACURE 651®; or 4-(2-hydroxy-ethoxy)phenyl-2-hydroxy-2-methylpropane-1-one, available under the trade name IRGACURE® 2959, each from Ciba-Geigy, Tarrytown, N.Y.

Suitable catalysts useful in the present invention may include thermal catalysts, such as cobalt soaps, e.g. cobalt octoate, for use in curing polyester and acrylic polymer or resins. Suitable cationic cure catalysts for epoxy and O-heterocycle containing polymers or resins may include onium compounds such as phosphonium, sulfonium, diaryl iodonium, and phosphine compounds, such as triphenyl phosphine.

Suitable fillers may include, for example, wollastonite, aluminum powder, magnesium silicate, barium sulfate, silicon dioxide, zinc powder, graphite powder, powdered rubbers, ABS powder, and chopped or continuous fibers selected from the group consisting of glass, graphite, acrylonitrile, polyimide and aramid to give abrasion resistant articles. Powder coatings may be filled with zinc powders to give them corrosion resistance. Higher loadings of fillers, e.g. from 30-600 phr, may be used in molding and shaping compositions, while lower loadings of fillers, e.g. from 10-300 phr, may be used in coating, powder coating and film-forming compositions.

Aqueous or solventborne compositions may be produced by adding one or more than one dried polymer, bulk or ground isotactic MPP or MPP copolymer or adduct to a polymer or resin containing aqueous or organic solvent medium or composition, with or without a dispersing agent or surfactant (a "stir-in" application); by forming an aqueous suspension, emulsion, dispersion or solution of a polymer or resin, such as by polymerization of polymer or resin, in the presence of isotactic MPP or MPP copolymer; or by combining aqueous suspensions, emulsions, dispersions or solutions of each of one or isotactic MPP or MPP copolymer and of one or more than one polymer or resin. Preferably, after combining or reacting together one or more than one isotactic MPP or MPP copolymer or adduct and the one or more than one polymer or resin, the combination or adduct is heated under high shear, e.g. by extrusion in a devolatilizing extruder, and then cooled under shear, to form a coating that gives a smooth and, if desired, high gloss appearance. If so desired, the resulting heated-with-shear and then cooled-with-shear composition may be directly blended, e.g. by the stir-in method, into one or more than one additional dry, bulk, aqueous or solvent borne polymer or resin.

To aid the dispersion of polymer or resin or isotactic MPP or MPP copolymers into water or organic solvent, small amounts of dispersing agents or surfactants, such as anionic, cationic and non ionic surfactants, such as polyoxyethylene alkyl or alkyl aryl ethers of fatty alcohols or fatty acids, polyoxyethylene ethers or esters of fatty alcohols or fatty acids, and fatty glycerides, may be added in amounts of from 0.001 to 4%, by weight based on the total weight of the composition.

A two component composition may be made by any of the above methods, provided that the reactive polymer or resin, e.g. polyisocyanate, and the curing agent or crosslinker, e.g. polyol, are kept separate from one another and are packaged separately.

Molding, film forming, powder coating, and article forming or shaping compositions preferably comprise bulk powders, but may have added solvent. Such compositions may be formed by melt mixing together all ingredients, such as by extrusion, followed by drying and dry blending, such as grinding in a bead mill or jet mill; by addition of one or more than one bulk, ground or dried polymer or resin to a solution, suspension or dispersion of one or more than one isotactic MPP or MPP copolymer or adduct, followed by drying, e.g. spray drying; by the formation of a polymer solution, suspension or dispersion of all ingredients, followed by drying, e.g. spray drying; by dry grinding all ingredients together, or by a combination thereof. Combination methods of making molding, film forming, powder coating, and article forming or shaping compositions include addition of one or more than one isotactic MPP or MPP copolymer or adduct solution, suspension or dispersion to a melt of one or more than one polymer or resin, followed by drying, or the addition of one or more than one dry polymer or resin to a dried extrudate of one or more than one isotactic MPP or MPP copolymer or adduct, followed by grinding. A two component composition may be made by any of the above methods, provided that the reactive polymer or resin, e.g. polyisocyanate, and the curing agent or crosslinker, e.g. polyol, are kept separate from one another and are packaged separately.

Coatings, primers and film forming compositions may advantageously be applied to any substrate which contains a polymer or resin that is present in the coating, primer or film forming composition. For example, the coatings, primers and film forming compositions of the present invention may be applied to polyolefin if they contain polyolefin, nylon if they contain nylon, polybutylene terephthalate (PBT) if they contain PBT, acrylonitrile-butadiene-styrene (ABS), e.g. brake parts, if they contain ABS, and any sheet molded composites (SMC) that contain any polymer contained in the coatings, primers and film forming compositions applied thereto. Preferably, aqueous or solvent borne coatings, primers and film forming compositions according to the present invention may be applied directly to interior and exterior automotive parts containing TPO or polyolefin.

When used on interior automotive substrates the coatings, primers and film forming compositions according to the present invention may comprise low bake (e.g. 160°F to 250°F or 71 °C to 121°C) compositions so as not to damage temperature sensitive substrates. Interior automotive substrates may include, but are not limited to, dashboards, switches and knobs, interior moldings, upholstery and airbags.

The coatings, primers and film forming compositions of the present invention may be applied to exterior automotive substrates, including the body, bumpers, cladding and exterior trim, as well as under hood and underbody, as primers, basecoats, direct adhesion color coats and clear coats. In basecoats and direct adhesion color coats, the use of isotactic MPP and MPP copolymers and adducts provides improved hold out and soak in resistance, as well as improved metal control in metallic pigment containing coatings. Because of the improved adhesion provided by isotactic MPP and MPP copolymers and adducts, a primer coat may be unnecessary, thereby making the basecoat a direct adhesion color coat. Further, isotactic MPP and MPP copolymers or adducts provide clear coats having improved scratch and mar resistance. Preferred clear coats may include epoxy functional materials for bug and sun resistance, and generally, include polyurethanes, polyesters, acrylics and mixtures or combinations thereof for weatherability and flexibility properties

Coatings, paints, primers, and film forming compositions may be applied to TPO or polyolefin substrates in a conventional fashion, such as by spraying, brushing, dipping or roll coating, followed by drying by conventional means, such as air drying or forced drying by heat. These may then be cured by, e.g. baking at from 160°F to 260°F ( 71 to 127°C), preferably 200 to 260 °F (93 to 127°C) for aqueous compositions and, preferably 160°F to 250°F (71°C to 121 °C) for solventborne compositions, for a bake period of from 15 to 45 minutes, preferably for 25 to 45 minutes. Alternatively, coatings, paints, primers and film formers may contain one or more than one photoinitiator and may be cured with ultraviolet (UV) light, or may be cured using both UV light and heat. It is not necessary for a composition according to the present invention to contain a thermal cure catalyst for it to be cured by heat.

Powder coatings may be applied to TPO or polyolefin substrates by conventional electrostatic spraying, magnetic brush and fluidized bed techniques, followed by thermal cure at from 71 to 149°C or by UV cure, or both. Powder coatings may comprise the same catalysts as are used in liquid coatings according to the present invention.

Moldings and shaped articles may be formed by conventional means, such as by extrusion, rapid injection molding (RIM), sheet molding, compressing into a desired shape either after or during curing (e.g. cold forging of thermoplastics), shaping in a female mold, during or followed by curing, and casting, e.g. in a suspension, followed by dewatering or removing solvent. Films, laminates and shaped articles may be formed by extrusion or, where water or solvent is present in the composition, by known solvent casting means.

The following Example illustrates an embodiment of the present invention. The following method was employed in the Example:

Adhesion to TPO was determined according to the cross hatch tape adhesion test for paint finishes, GM9071P Engineering Standard (June 2001), using a 75mm length of 20mm W X 0.24mm thick pressure sensitive adhesive tape having a 0.08mm thick backing. The tape had a peel strength of 430 N/m min (steel ASTM D3330M). Excellent results indicate 100% adhesion of coating to the surface of the cross hatch area. Good results indicate from 99% to 100% adhesion of coating to the surface of the cross hatch area. Poor results indicate anything less than 99% adhesion of coating to the surface of the cross hatch area.

EXAMPLE

An acrylic/MPP adduct was used to test adhesion to TPO and compatibility with TPO.

An hydroxyl functional acrylic polymer, 50% solids by weight in xylene, as shown below, was polymerized in the following manner:

400 grams (g) of xylene was charged to a reactor which was heated to 230 °F (110°C) in a nitrogen atmosphere, with stirring, under reflux. Then 553 g of a mixture containing 496 g of monomer, 3 g of initiator and 54 g of xylene was metered into the reactor over a 4 hour period. A final feed of 1 g of initiator in 28 g of xylene was then metered into the reactor over a 0.5 final feed, followed by flushing the reactor with 18 g of xylene and cooking for 2 more hours at 230 °F (110°C). The resulting acrylic polymer had an hydroxyl number of approximately 10 (mg/g KOH).

400 g of a 50% solution in xylene of the resulting acrylic polymer was reacted with 20 g of an isotactic polypropylene having a molecular weight of approximately 2000 (Mn), and a melting point of 120°C, as determined by differential scanning calorimetry (DSC). The isotactic polypropylene was terminally modified with maleic anhydride (one anhydride per polypropylene molecule). To form the adduct, a solvent, acrylic polymer and isotactic maleic MPP were mixed and heated to 250°F (121°C) in a nitrogen atmosphere, under reflux, with stirring, for six hours, and then reduced to 40% solids by weight with xylene. The remaining solution was heated to 250°F (121°C) under high shear with glass beads, was allowed to cool to 120°F (49°C), and was concentrated to 70% solids, by weight, in xylene.

| Hydroxyl Functional Acrylic Polymer | (Mn = 5482; Hydroxyl value = 150) | |
|---|---|---|
| Xylene | 50.00 parts by weight (pbw) | |
| 2-HEMA | 3.25 (pbw) | |
| n-BMA (n-butyl methacrylate) | 36.32 (pbw) | |
| Styrene | 10.00 (pbw) | |
| t-Butyl Peroctoate | 0.43(pbw) | |
| | 100.00 | |
| Adduct Reaction Mixture and Added Solvent | | |
| 50% solids hydroxyl functional acrylic polymer in xylene | 400.00 (g) | |
| Monomaleic functional isotactic MPP | +20.00 (g) | |
| | $\overline{420.00\ (g)}$ | |
| Concentration of Adduct in Xylene | | |
| | 420.00 (g) | |
| Removed xylene | - 106.00 (g) | |
| Adduct product | $\overline{314g}$ | |

A 70/30 (w/w) blend of the adduct in xylene was coated on TPO and baked 30 minutes at 250°F. Adhesion to TPO was excellent. By comparison, an ungrafted hydroxyl functional acrylic polymer was also applied to TPO and baked for 30 minutes at 250°F. Results are shown Table I, below.

Table I

| Coating Formulation | Adhesion to TPO (250°F Bake/30 minutes) |
|---|---|
| Adduct Coating | Excellent |
| Ungrafted Hydroxyl Functional Acrylic Polymer | Poor |
| Adduct Coating+ hexamethylene diisocyanate trimer | Poor |
| Ungrafted Hydroxyl Functional Acrylic Polymer+ hexamethylene diisocyanate trimer | Poor |

The adduct coating illustrated excellent adhesion to TPO while the control failed adhesion. In addition, the coating maintained adhesion to TPO after 240 hrs. exposure to 100% relative humidity at 100°F (38°C).

**Claims**

1. A composition comprising one or more than one isotactic, modified polypropylene (MPP) or polypropylene-$\alpha$-olefin copolymer (MPP copolymer) and one or more than one polymer or resin, wherein said MPP or MPP copolymer is modified with one or more than one carboxyl, anhydride, hydroxyl or epoxy group.

2. A composition as claimed in Claim 1, wherein said carboxyl or anhydride group comprises maleic acid or maleic anhydride.

3. A composition as claimed in Claim 1, wherein said isotactic MPP or MPP copolymer is carboxyl, anhydride, hydroxyl, or epoxy terminated.

4. A composition as claimed in Claim 1, wherein said isotactic MPP or MPP copolymer has a terminal olefin double bond and a number average molecular weight (Mn) that ranges from 500 to 10,000.

5. A composition comprising one or more than one adduct which is the reaction product of one or more than one isotactic, modified polypropylene (MPP) or polypropylene-$\alpha$-olefin copolymer (MPP copolymer) with one or more than one polymer or resin, wherein said MPP or MPP copolymer is modified with one or more than one carboxyl, anhydride, hydroxyl or epoxy group.

6. A composition as claimed in Claim 1, wherein said polymer or resin is selected from the group consisting of an acrylic polymer, a polyfunctional acrylic monomer, a polyester, an alkyd, an acrylic modified alkyd, a polyurethane, a polyamide, a polyamine, a polyimine, a styrene polymer, a vinyl polymer, an epoxy resin, and mixtures and combinations thereof.

7. A composition as claimed in Claim 1, further comprising water, organic solvent, or mixtures thereof.

8. A composition as claimed Claim 7, further comprising chlorinated polyolefin (CPO).

9. A composition as claimed in any one of Claims 1-8, wherein said isotactic MPP comprises from 40% to 90%, by weight, of isotactic units, based on the total weight of monomeric units contained in the polymer, and said MPP copolymer comprises from 9% to 90%, by weight, of isotactic units, based on the total weight of monomeric units contained in the polymer.

10. A coating or a film comprising the cured composition as claimed in Claim 9.

**European Patent Office**

## EUROPEAN SEARCH REPORT

Application Number

EP 04 25 0805

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 211 290 B1 (HAILAT MOHAMMAD ET AL) 3 April 2001 (2001-04-03) * abstract; claims 1-18 * * column 3, line 12 - column 4, line 65 * * column 5, lines 1-42 * * column 8, lines 12-16 * | 1-7,9,10 | C08G81/02 C08L51/06 C09D151/06 |
| X | US 5 130 371 A (FUJITA Y ET AL) 14 July 1992 (1992-07-14) * abstract; claims 1-4 * * column 4, lines 38,58-66 * | 1-5,9,10 | |
| X | WO 88/06174 A (DEXTER CORP) 25 August 1988 (1988-08-25) * abstract; claims 1-20 * * page 8, lines 12-21 * | 1-3,5,6, 9 | |
| X A | EP 0 725 111 A (BEE CHEMICAL CO) 7 August 1996 (1996-08-07) * abstract; claims 1-12 * * page 2, lines 13,30,54 * * page 3, lines 2-35 * * page 4, lines 12-15,32-35 * | 1-4,6,7, 9,10 8 | |
| | | | TECHNICAL FIELDS SEARCHED (Int.Cl.7) C08G C08L C09D |
| X | PATENT ABSTRACTS OF JAPAN vol. 0101, no. 03 (C-340), 18 April 1986 (1986-04-18) & JP 60 233131 A (TOA GOSEI KAGAKU KOGYO KK; others: 01), 19 November 1985 (1985-11-19) * abstract * | 1-3,6 | |
| X | EP 0 936 246 A (MONTELL NORTH AMERICA INC) 18 August 1999 (1999-08-18) * abstract; claims 1-8 * * page 3, line 14 * | 1-6,9,10 | |

-/--

The present search report has been drawn up for all claims

| Place of search | Date of completion of the search | Examiner |
|---|---|---|
| The Hague | 8 June 2004 | Bergmans, K |

**European Patent Office**

## EUROPEAN SEARCH REPORT

Application Number

EP 04 25 0805

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 789 568 A (IWASE OSAMU ET AL) 6 December 1988 (1988-12-06) | 1-7,9,10 | |
| A | * abstract; claims 1-15 * <br> * column 2, line 28 * <br> * column 3, lines 31,60 * <br> ----- | 8 | |
| X | US 6 225 404 B1 (BOOGH LOUIS ET AL) 1 May 2001 (2001-05-01) <br> * abstract; claims 1-83 * <br> * column 2, lines 32-60 * <br> * column 14, line 33 * <br> ----- | 1-6,8,10 | |

TECHNICAL FIELDS
SEARCHED     (Int.Cl.7)

The present search report has been drawn up for all claims

| Place of search | Date of completion of the search | Examiner |
|---|---|---|
| The Hague | 8 June 2004 | Bergmans, K |

EPO FORM 1503 03.82 (P04C01)

# EP 1 457 513 A1

**ANNEX TO THE EUROPEAN SEARCH REPORT
ON EUROPEAN PATENT APPLICATION NO.**
EP 04 25 0805

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2004

| Patent document cited in search report | | Publication date | Patent family member(s) | | Publication date |
|---|---|---|---|---|---|
| US 6211290 | B1 | 03-04-2001 | NONE | | |
| US 5130371 | A | 14-07-1992 | WO | 9114248 A1 | 19-09-1991 |
| | | | AU | 6548590 A | 31-05-1991 |
| | | | WO | 9106592 A1 | 16-05-1991 |
| WO 8806174 | A | 25-08-1988 | AU | 625751 B2 | 16-07-1992 |
| | | | AU | 1345888 A | 14-09-1988 |
| | | | AU | 636811 B2 | 06-05-1993 |
| | | | AU | 1407192 A | 18-06-1992 |
| | | | BR | 8807359 A | 29-05-1990 |
| | | | EP | 0344205 A1 | 06-12-1989 |
| | | | ES | 2006080 A6 | 01-04-1989 |
| | | | JP | 2502289 T | 26-07-1990 |
| | | | MX | 166648 B | 26-01-1993 |
| | | | WO | 8806174 A1 | 25-08-1988 |
| EP 0725111 | A | 07-08-1996 | US | 5709946 A | 20-01-1998 |
| | | | AT | 178631 T | 15-04-1999 |
| | | | AU | 674636 B2 | 02-01-1997 |
| | | | AU | 4027895 A | 08-08-1996 |
| | | | BR | 9600300 A | 23-12-1997 |
| | | | CA | 2165529 A1 | 02-08-1996 |
| | | | CN | 1132230 A ,B | 02-10-1996 |
| | | | DE | 69601955 D1 | 12-05-1999 |
| | | | DE | 69601955 T2 | 05-08-1999 |
| | | | EP | 0725111 A2 | 07-08-1996 |
| | | | ES | 2131908 T3 | 01-08-1999 |
| | | | HK | 1004988 A1 | 24-03-2000 |
| | | | JP | 2975303 B2 | 10-11-1999 |
| | | | JP | 8239496 A | 17-09-1996 |
| | | | KR | 172174 B1 | 30-03-1999 |
| | | | PL | 312558 A1 | 05-08-1996 |
| | | | US | 6455614 B1 | 24-09-2002 |
| | | | ZA | 9510668 A | 29-07-1996 |
| JP 60233131 | A | 19-11-1985 | NONE | | |
| EP 0936246 | A | 18-08-1999 | US | 5962573 A | 05-10-1999 |
| | | | AT | 264367 T | 15-04-2004 |
| | | | AU | 741506 B2 | 06-12-2001 |
| | | | AU | 1643299 A | 26-08-1999 |
| | | | BR | 9900447 A | 01-02-2000 |
| | | | CA | 2260751 A1 | 13-08-1999 |
| | | | CN | 1229813 A | 29-09-1999 |
| | | | CZ | 9900367 A3 | 15-12-1999 |

EPO FORM P0459

For more details about this annex : see Official Journal of the European Patent Office, No. 12/82

14

## ANNEX TO THE EUROPEAN SEARCH REPORT
## ON EUROPEAN PATENT APPLICATION NO.

EP 04 25 0805

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2004

| Patent document cited in search report | | Publication date | Patent family member(s) | | Publication date |
|---|---|---|---|---|---|
| EP 0936246 | A | | DE 69916349 D1 | | 19-05-2004 |
| | | | EP 0936246 A1 | | 18-08-1999 |
| | | | ID 23643 A | | 04-05-2000 |
| | | | JP 11279341 A | | 12-10-1999 |
| | | | TR 9900290 A2 | | 21-10-1999 |
| US 4789568 | A | 06-12-1988 | JP 2018874 C | | 19-02-1996 |
| | | | JP 7056012 B | | 14-06-1995 |
| | | | JP 62246971 A | | 28-10-1987 |
| | | | DE 3713120 A1 | | 22-10-1987 |
| US 6225404 | B1 | 01-05-2001 | SE 509240 C2 | | 21-12-1998 |
| | | | AU 2985497 A | | 05-01-1998 |
| | | | CA 2256343 A1 | | 04-12-1997 |
| | | | CN 1223675 A ,B | | 21-07-1999 |
| | | | EP 0902803 A1 | | 24-03-1999 |
| | | | JP 2000511219 T | | 29-08-2000 |
| | | | SE 9602019 A | | 29-11-1997 |
| | | | WO 9745474 A1 | | 04-12-1997 |

EPO FORM P0459

For more details about this annex : see Official Journal of the European Patent Office, No. 12/82